(19) Europäisches Patentamt
European Patent Office
Office européen des brevets

(11) **EP 4 162 181 B1**

(12) **EUROPEAN PATENT SPECIFICATION**

(45) Date of publication and mention
of the grant of the patent:
**08.10.2025   Bulletin 2025/41**

(21) Application number: **21731434.3**

(22) Date of filing: **03.06.2021**

(51) International Patent Classification (IPC):
***F16K 1/12*** *(2006.01)*

(52) Cooperative Patent Classification (CPC):
**F16K 31/54; F16K 1/12; F16K 31/50; G01F 1/40;
G01F 1/46; G01F 15/003; G01F 15/005**

(86) International application number:
**PCT/EP2021/064914**

(87) International publication number:
**WO 2021/245191 (09.12.2021 Gazette 2021/49)**

(54) **VALVE FOR AIR FLOW CONTROL**

VENTIL ZUR LUFTSTROMREGELUNG

SOUPAPE POUR LA RÉGULATION DU DÉBIT D'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **05.06.2020   CH 6752020
16.06.2020   CH 7162020**

(43) Date of publication of application:
**12.04.2023   Bulletin 2023/15**

(73) Proprietor: **Zehnder Group International AG
5722 Gränichen (CH)**

(72) Inventor: **COMPAGNER, Reinout
7951 ME Staphorst (NL)**

(74) Representative: **Rentsch Partner AG
Kirchenweg 8
Postfach
8034 Zürich (CH)**

(56) References cited:
FR-A- 1 482 023      FR-A1- 2 385 029
JP-U- 3 060 297      SE-C2- 520 294
US-A- 1 545 209      US-A1- 2004 238 038
US-A1- 2012 000 448

## Description

The present invention relates to a valve for air flow control.

Valves for air flow control are known. Typically, such known valves comprise a flap rotatably mounted in a pipe section. The flap can be rotated between a closed position allowing minimum or no air flow through the valve and an open position allowing maximum air flow through the valve.

Such known flap-type valves generate a high degree of turbulence in the immediate vicinity when air passes through them, especially when the valve is moved away from its open position with the plane of the flap forming an angle between about 5° (almost fully open) and 90° (closed) with respect to the longitudinal axis of the pipe section or the overall air flow direction. This high degree of turbulence may be described as comprising both microturbulence with smaller-scale rotational air movement, i.e. vortices with relatively small diameters, and macroturbulence with larger-scale rotational air movement, i.e. vortices with relatively large diameters Due to relatively high air speeds in a valve, microturbulence is usually always present. In contrast, macroturbulence is added to the microturbulence when the flap is in a position moved away from its open position.

Both microturbulence and macroturbulence contribute to noise generation. Pressure measurements to be used for air flow determination can be performed in air flow regions with microturbulence. However, such pressure measurements, when performed in air flow regions with macroturbulence, do not lend themselves to air flow determination.

Therefore, it is an object of the invention to provide a valve for air flow control which produces less noise and which lends itself to pressure measurements that can be used for air flow determination. US 2004/238038 discloses a valve for air flow control according to the preamble of claim 1.

In order to overcome the above described shortcomings fully or at least partially and to achieve this object, the present invention provides a valve for air flow control comprising a pipe section and an obstacle element arranged within the pipe section, wherein the pipe section defines a longitudinal pipe axis and has a first pipe end portion, a second pipe end portion and an inner pipe surface between the first pipe end portion and the second pipe end portion. The obstacle element defines a longitudinal obstacle axis and has a first obstacle end portion, a second obstacle end portion and an outer obstacle surface between the first obstacle end portion and the second obstacle end portion. The inner pipe surface and the outer obstacle surface define an air passage region between the pipe section and the obstacle element. The pipe section further has an intermediate pipe portion, between its first pipe end portion and its second pipe end portion. In particular, the inner pipe surface may be part of the intermediate pipe portion.

An internal cross sectional area of the intermediate pipe portion is different from, i.e. either a) larger or b) smaller than, an internal cross sectional area of the first pipe end portion and of the second pipe end portion. The obstacle element further comprises an intermediate obstacle portion, between its first obstacle end portion and its second obstacle end portion, where a cross sectional area, i.e. an external cross sectional area, of the intermediate obstacle portion is different from, i.e. either a) larger or b) smaller than, a cross sectional area, i.e. an external cross-sectional area, of the first obstacle end portion and of the second obstacle end portion. The obstacle element is further movably supported within the pipe section. The valve further comprises a drive element being provided, i.e. being configured, for moving the obstacle element with respect to the pipe section.

By operating the drive element to move the obstacle element with respect to the pipe section, a cross section of the air passage region between the pipe section and the obstacle element is changed without causing much large-scale turbulence, i.e. macroturbulence upstream and downstream of the obstacle element which has been moved. As a result, the noise caused by the air flow within the valve is kept low, both before and after moving of the obstacle element within the pipe section. In addition, due to the absence of large-scale turbulence both upstream and downstream of the obstacle element, these upstream and downstream regions within the valve lend themselves to pressure measurements for air flow determination.

The longitudinal pipe axis is typically parallel to the direction of air flow through the pipe. In some embodiments, the longitudinal obstacle axis may be parallel, in particular identical, to the longitudinal pipe axis. The longitudinal obstacle axis may in some embodiments cross the two positions of the obstacle element which have the largest linear possible distance between them.

The first obstacle end portion and the second obstacle end portion may typically refer to at least the two endpoints of the obstacle element, i.e. the first point being contacted by air flowing through the valve in the longitudinal direction and the las point being contacted by air flowing through the valve in the longitudinal direction. In other specific embodiments, the first obstacle end portion and the second obstacle end portion may have an infinitesimal small extension along the longitudinal direction, respectively the longitudinal obstacle axis. However, in some embodiments, the first obstacle end portion and the second obstacle end portion may extend along the longitudinal obstacle axis In certain embodiments the major part of the obstacle element along the longitudinal obstacle axis, i.e. at least 50%, particularly at least 60%, particularly at least 70%, particularly at least 80%, particularly at least 90%, may consist of the intermediate obstacle portion, while the remaining part may be equally distributed between the first obstacle end portion and the second obstacle end portion.

The term "internal cross sectional area" may refer to the cross section of a tubular body excluding the body's walls. For example, the internal cross sectional area of a pipe refers to the cross sectional area of the surface between the walls, excluding the cross-sectional area of the walls. Therefore, the internal cross sectional area of a given pipe portion describes the total open area, i.e. the total open area at a given position along the longitudinal pipe axis, of this pipe portion.

Vice versa, an "external cross sectional area" may refer to the cross sectional area of an element including the cross-sectional area of any corresponding walls.

Furthermore, if elements are addressed herein as "first element" and "second element", these elements may particular be different from each other. For example, the first obstacle end portion is different, for example at a different location than the second obstacle end portion.

By moving the obstacle element with respect to the pipe section in a first direction along the longitudinal pipe axis, the first obstacle transition region will get closer to the first pipe transition region, thus reducing the space therebetween. As a result, the cross-sectional area therebetween is reduced and the air flow resistance of the valve is increased. Similarly, by shifting the obstacle element with respect to the pipe section in a second direction, being different to the first direction, particularly being opposite to the first direction, along the longitudinal pipe axis, the second obstacle transition region will get closer to the second pipe transition region, thus reducing the space therebetween. As a result, the cross-sectional area therebetween is reduced and the air flow resistance of the valve is increased.

The first obstacle transition region and the second obstacle transition region may be arranged between the first obstacle end portion and the second obstacle end portion. They may be identical to or may at least be part of or form together the intermediate obstacle portion. The first obstacle end portion and the second obstacle end portion may comprise at least one of a shoulder, a straight slope and a curved slope. Typically, starting from the first obstacle end portion or from the second obstacle end portion, the diameter, respectively the cross sectional area, of the obstacle element along the longitudinal obstacle axis changes, particularly increases. In some embodiments, the first obstacle transition region may be plane symmetrical to the second obstacle transition region with respect to a plane being perpendicular to the longitudinal obstacle axis.

The first pipe transition region and the second pipe transition region may be arranged between the first pipe end portion and the second pipe end portion. They may be identical to or may at least be part of or form together the intermediate pipe portion. They may also be separate from the intermediate pipe portion, i.e. they may be arranged between the intermediate pipe portion and the first pipe end portion, respectively the second pipe end portion. The first pipe transition region and the second pipe transition region may comprise at least one of a shoulder, a straight slope and a curved slope. In other words, the longitudinal profile of the first pipe transition region and the second pipe transition region may comprise at least one of a step function, a linear function and a nonlinear function. Typically, starting from the first pipe end portion or from the second pipe end portion, the diameter of the pipe along the longitudinal pipe axis changes, particularly increases. In some embodiments, the first pipe transition region may be plane symmetrical to the second pipe transition region with respect to a plane being perpendicular to the longitudinal obstacle axis.

In version a) of the invention, the cross-sectional area of the intermediate portion of both the pipe section and the obstacle element is larger than the cross-sectional area of the end portions of both the pipe section and the obstacle element. Therefore, the pipe section has a first pipe transition region between the first pipe end portion and the intermediate pipe portion and a second pipe transition region between the intermediate pipe portion and the second pipe end portion. Each of these pipe transition regions comprises a transition, i.e. a change in cross-sectional area as a function of location on the longitudinal pipe axis, between a large cross-sectional area of the intermediate pipe portion and a small/smaller cross-sectional area of each of the pipe end portions. Similarly, the obstacle element has a first obstacle transition region between the first obstacle end portion and the intermediate obstacle portion and a second obstacle transition region between the intermediate obstacle portion and the second obstacle end portion. Again, each of these obstacle transition regions comprises a transition, i.e. a change in cross-sectional area as a function of location on the longitudinal obstacle axis, between a large cross-sectional area of the intermediate obstacle portion and a small/smaller cross-sectional area of each of the obstacle end portions.

In version b) of the invention, the cross-sectional area of the intermediate portion of both the pipe section and the obstacle element is smaller than the cross-sectional area of the end portions of both the pipe section and the obstacle element. Therefore, the pipe section has a first pipe transition region between the first pipe end portion and the intermediate pipe portion and a second pipe transition region between the intermediate pipe portion and the second pipe end portion. Each of these pipe transition regions comprises a transition, i.e. a change in cross-sectional area as a function of location on the longitudinal pipe axis, between a small cross-sectional area of the intermediate pipe portion and a large/larger cross-sectional area of each of the pipe end portions. Similarly, the obstacle element has a first obstacle transition region between the first obstacle end portion and the intermediate obstacle portion and a second obstacle transition region between the intermediate obstacle portion and the second obstacle end portion. Again, each of these obstacle transition regions comprises a transition, i.e. a change in cross-sectional area as a function of location on the longitudinal obstacle axis, between a small cross-sectional area of the intermediate obstacle portion and a large/larger cross-sectional area of each of the obstacle end portions.

Preferably, the obstacle element is movable along the longitudinal pipe axis.

More preferably, the obstacle element is movably supported by a guide element extending along the longitudinal pipe axis.

The valve may comprise a first support element located within and attached to the first pipe end portion, a second support element located within and attached to the second pipe end portion, with the guide element being fixed to the first support element and the second support element and extending therebetween along the longitudinal pipe axis.

This allows all the functional mechanical elements for operating the valve to be arranged within the pipe portion, thus not using up any space outside the pipe section. This contributes to the compactness of the valve.

Preferably, the guide element is a guide rail, more preferably a linear guide rail.

Preferably, the obstacle element is movably mounted on the linear guide element and can be moved to selected longitudinal positions with respect to the pipe section along the longitudinal pipe axis.

Advantageously, the guide element extends through the inside of the obstacle element. Thus, the guide element may protrude the obstacle element, in particular along the longitudinal obstacle axis.

This allows a major portion of guide element to be arranged within the obstacle element, thus minimizing the space used up by it outside the obstacle element and within the pipe section. This further contributes to the compactness of the valve.

Advantageously, the drive element is located within the obstacle element and adapted to interact with the guide element. Preferably, the drive element is fixed to the obstacle element or integral with the obstacle element, thereby preventing the drive element from using up any space outside the obstacle element and within the pipe section. This further contributes to the compactness of the valve.

As a first version, the drive element adapted to interact with the guide element may be constituted by a rack and pinion drive, with the guide element being a rack and the drive element being a pinion.

As a second version, the drive element adapted to interact with the guide element may be a worm gear drive, with the guide element being a worm screw and the drive element being a worm wheel.

Preferably, at least one of the pipe section and the obstacle element is rotationally symmetrical with respect to the longitudinal pipe axis and the longitudinal obstacle axis, respectively.

First, rotationally symmetrical pipes and obstacles can be easily manufactured. Second, they result in relatively homogenous flow patterns when air flows within them or around them. The obstacle element may have a bullet shape, i.e. one side tapering off to an essentially pointed first end another side having a second end with a planar and perpendicular surface, i.e. an abrupt cut-off, or it may have an ovoid shape, i.e. both sides having essentially a pointed end. The bullet-shape is more compact in the longitudinal direction while the ovoid shape enables bidirectional operation.

Preferably, the obstacle element and the pipe section are arranged concentrically to each other with the longitudinal pipe axis and the longitudinal obstacle axis coinciding.

As a result, the air flow pattern in the air passage region between the pipe section and the obstacle element is relatively homogenous. Any air flow turbulence in the air passage region will have turbulent structures, for instance, diameters of local vortices, which are smaller than the local width of the air passage region between opposite local areas of the inner pipe surface and the outer obstacle surface. This air flow mode is also referred to as "microturbulence" in this text.

Preferably and similarly to what was outlined above as version a), the intermediate pipe portion between the first pipe end portion and the second pipe end portion is a widened pipe portion forming a pipe enlargement of the pipe section. With other words, the total open area of the intermediate pipe portion may first increase from the second pipe end portion along the longitudinal pipe axis, then reach a maximum value and then decrease towards the first pipe end portion.

Preferably and similarly to what was outlined above as version a), the intermediate obstacle portion between the first obstacle end portion and the second obstacle end portion is a widened obstacle portion forming an obstacle enlargement of the obstacle element. With other words, the diameter of the intermediate obstacle portion may first increase from the second obstacle end portion along the longitudinal pipe axis, then reach a maximum value and then decrease towards the first obstacle end portion

As a result, the air passage region between the pipe enlargement and the obstacle enlargement has a relatively large circumference, i.e. a large circumferential area. Thus, even with a relatively small radial width $\Delta R = R_2 - R_1$ between the outer radius $R_2$ and the inner radius $R_1$ in the "most open" valve configuration with minimum air flow resistance and maximum total cross sectional area CSAP of the air passage region, this total cross sectional area CSAP is approximately $2\pi R_{AVERAGE} \Delta R = \pi (R_2 + R_1)(R_2 - R_1)$.

Preferably, this is selected to be about the same as the cross sectional area $CSPE = \pi R_0^2$ of the pipe end portions with a radius $R_0$.

Preferably,

$$0.2 \times CSPE < CSAP < 1.2 \times CSPE.$$

More preferably,

0.4 x CSPE < CSAP < 1.0 x CSPE.

Preferably, the pipe section is symmetrical or unsymmetrical with respect to a plane orthogonal to the longitudinal pipe axis.

Preferably, the obstacle element is symmetrical or unsymmetrical with respect to a plane orthogonal to the longitudinal obstacle axis.

With both the pipe section and the obstacle element having this type of symmetry, the valve lends itself to bidirectional operation:

The valve offers minimum air flow resistance if the obstacle element is in an intermediate position between the first pipe end portion and the second pipe end portion; the valve offers maximum air flow resistance if the obstacle element is moved towards the first pipe end portion or towards the second pipe end portion.

Preferably, the inner pipe surface at the intermediate pipe portion of the pipe section comprises an inner taper with respect to the longitudinal pipe axis and the outer obstacle surface at the intermediate obstacle portion of the obstacle element comprises an outer taper with respect to the longitudinal obstacle axis. The inner pipe surface and the outer obstacle surface are typically complementary to each other, e.g. the tapers may have the same orientation.

Preferably, a maximum inner taper angle between a tangential plane of the inner pipe surface and the longitudinal pipe axis is comprised between 5° and 20°, preferably between 5° and 15°.

Preferably, a maximum outer taper angle between a tangential plane of the outer obstacle surface and the longitudinal obstacle axis is comprised between 10° and 40°, preferably between 10° and 30°.

Preferably, at least a portion of the inner taper and/or the outer taper is an envelope of a cone or a truncated cone.

Preferably, the inner pipe surface comprises a first taper widening along a first longitudinal direction and a second taper widening along a second longitudinal direction opposite to the first longitudinal direction.

Preferably, the pipe enlargement is rotationally symmetrical with respect to the longitudinal pipe axis and has an inner radius $R_i(x)$ defining a longitudinal pipe profile which varies as a function of longitudinal position x along the longitudinal pipe axis.

In a preferred embodiment, the longitudinal pipe profile $R_i(x)$ has the following consecutive profile portions, particularly along the longitudinal pipe axis:

a first profile portion with increasing positive slope $dR_i/dx$, i.e. a positive curvature;
a first inflexion point;
a second profile portion with decreasing positive slope $dR_i/dx$, i.e. a negative curvature;
a maximum;
a third profile portion with increasing negative slope $dR_i/dx$, i.e. a negative curvature;
a second inflexion point;
a fourth profile portion with decreasing negative slope $dR_i/dx$, i.e. a positive curvature.

It is noted that the pipe enlargement defined by this longitudinal pipe profile $R_i(x)$ has two inflexion points, along the longitudinal axis one on each side of its maximum.

Preferably, the maximum of the longitudinal pipe profile $R_i(x)$ is a profile portion with zero slope. Such a zero slope portion constitutes a plateau portion of the longitudinal pipe profile $R_i(x)$. Due to the rotational symmetry of the pipe enlargement, the zero slope profile portion corresponds to the intermediate pipe portion being a cylindrical pipe portion of the pipe section.

Preferably, the obstacle enlargement is rotationally symmetrical with respect to the longitudinal obstacle axis and has an outer radius $R_o(x)$ defining a longitudinal obstacle profile which varies as a function of longitudinal position x along the longitudinal obstacle axis.

In a preferred embodiment, the longitudinal obstacle profile $R_o(x)$ has the following consecutive profile portions:

a first profile portion with positive slope $dR_o/dx$;
a maximum;
a second profile portion with negative slope $dR_o/dx$.

It is noted that the obstacle enlargement defined by this longitudinal obstacle profile $R_o(x)$ does not necessarily have an inflexion point, however it may have an inflexion point in some embodiments.

Preferably, the obstacle element has an ovoid shape such as a cigar shape or a rugby ball shape.

In a preferred embodiment, the longitudinal obstacle profile $R_o(x)$ has the following consecutive profile portions:

a first profile portion with increasing positive slope $dR_o/dx$, i.e. a positive curvature;
a first inflexion point;
a second profile portion with decreasing positive slope $dR_o/dx$, i.e. a negative curvature;
a maximum;
a third profile portion with increasing negative slope $dR_o/dx$, i.e. a negative curvature;
a second inflexion point;
a fourth profile portion with decreasing negative slope $dR_o/dx$ i.e. a positive curvature.

It is noted that the obstacle enlargement defined by this longitudinal obstacle profile $R_o(x)$ has two inflexion points, along the longitudinal obstacle axis one on each side of its maximum.

Preferably, the maximum of the longitudinal obstacle profile $R_o(x)$ is a profile portion with zero slope. Such a zero slope portion constitutes a plateau portion of the longitudinal obstacle profile Ro(x). Due to the rotational symmetry of the obstacle enlargement, the zero slope profile portion corresponds to the intermediate obstacle portion being a cylindrical obstacle portion of the obstacle element.

Preferably, the first support element and/or the second support element comprise pressure sensor means.

With the first support element and the second support element being located upstream or downstream of the obstacle element, there is primarily microturbulence and not much macroturbulence in the air flow around any of the pressure sensor means.

Preferably, such pressure sensor means is mounted in a distributed arrangement on the support element. Such distributed arrangement may be a plurality of pressure sensor means mounted spaced from each other and/or at least one elongate pressure sensor means extending across the first pipe end portion and/or across the second pipe end portion.

Both the microturbulent air flow environment and the averaging effect due to the distributed arrangement of the sensor means results in improved pressure measurement values to be used as a basis for air flow determination.

The first pipe end portion and the second pipe end portion comprise pressure sensor means.

Again, with the first pipe end portion and the second pipe end portion being located upstream or downstream of the obstacle element, there is primarily microturbulence and not much macroturbulence in the air flow around or past any of the pressure sensor means.

Preferably, such pressure sensor means is mounted in a distributed arrangement on the pipe end portion. Such distributed arrangement may be a plurality of pressure sensor means mounted spaced from each other and/or at least one elongate pressure sensor means circumferentially extending along at least a portion of a circumference of the first pipe end portion and/or the second pipe end portion.

The first pipe end portion comprises a first flow ring arrangement for spatially averaged pressure measurement.

The second pipe end portion comprises a second flow ring arrangement for spatially averaged pressure measurement.

Such a first or second flow ring arrangement may comprise a radially circumferential groove allowing for an average pressure measurement. At the position of the groove the static pressure can be measured.

Any one of such flow ring arrangements may be used for measuring pressure at given locations. These measured pressure values may be averaged in the flow ring arrangements before being processed for air flow determination.

Again, both the microturbulent air flow environment and the averaging effect due to the distributed arrangement of the sensor means results in improved pressure measurement values to be used as a basis for air flow determination.

In addition, the pipe section may comprise an air flow resistor and/or an air flow straightener. Such an air flow resistor may have a honeycomb structure. This may provide an almost linear relationship between pressure drop and air flow across the air flow resistor.

Preferably, the first pipe end portion comprises a first pipe constriction portion between the first support element and the obstacle element.

Preferably, the second pipe end portion comprises a second pipe constriction portion between the second support element and the obstacle element.

Such first and second pipe constrictions may be constituted by a constriction insert within a non-constricted cylindrical pipe section.

Preferably, the intermediate pipe portion comprises pressure sensor means at the maximum or plateau portion of the longitudinal pipe profile Ri(x), i.e. the position along the longitudinal pipe axis at which the total open area, respectively the cross sectional area has the largest value. The portion of the air passage region between the pipe profile plateau portion and the obstacle profile plateau portion, i.e. between the cylindrical pipe portion of the pipe section and the cylindrical obstacle portion of the obstacle element, allows the air flow to be microturbulent which lends itself well to pressure measurements.

## Brief description of the drawings

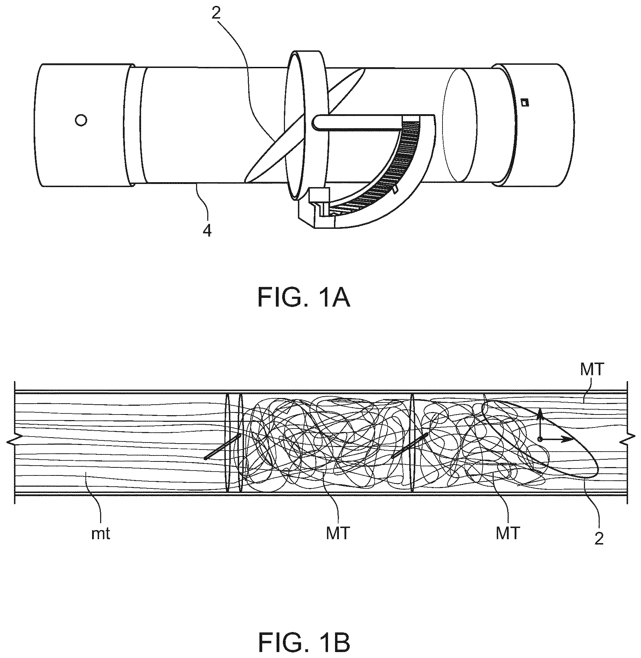

Fig. 1A shows a known valve for air flow control;
Fig. 1B shows a flow pattern around a type of valve of Fig. 1A with lines indicating macroturbulence;
Fig. 2A shows a valve for air flow control according to a first not claimed embodiment;
Fig. 2B shows a flow pattern around the valve of Fig. 2A with lines indicating microturbulence;
Fig. 3 shows a longitudinal section of the valve according to the first embodiment; and
Fig. 4 shows a longitudinal section of a valve according to a second not claimed embodiment;
Fig. 5 shows a valve for air flow control according to a third not claimed embodiment;
Fig. 6A shows a valve for air flow control according to a fourth embodiment in its most open position;
Fig. 6B shows the valve according to the fourth embodiment close to its most closed position;
Fig. 7A shows a flow pattern around the valve according to the fourth embodiment with the valve being in a first position;
Fig. 7B shows a flow pattern around the valve according to the fourth embodiment with the valve being in a second position;
Fig. 8A shows a valve for air flow control according to a fifth embodiment (claimed) in an almost closed position;

Fig. 8B shows a valve for air flow control according to a sixth embodiment (claimed) close to its most open position;

Fig. 9 shows a detail of a valve for air flow control according to a seventh embodiment (claimed) of the invention;

Fig. 10 shows five different types of air flow resistors which may be used with the valve according to the invention; and

Fig. 11 is a schematic diagram showing a typical installation environment where one or more valves according to invention are installed.

**Detailed Description of the Invention**

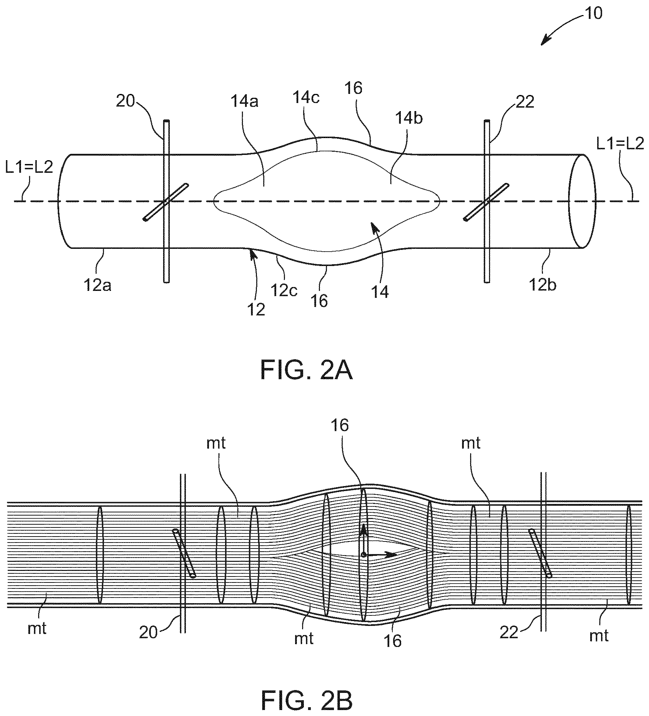

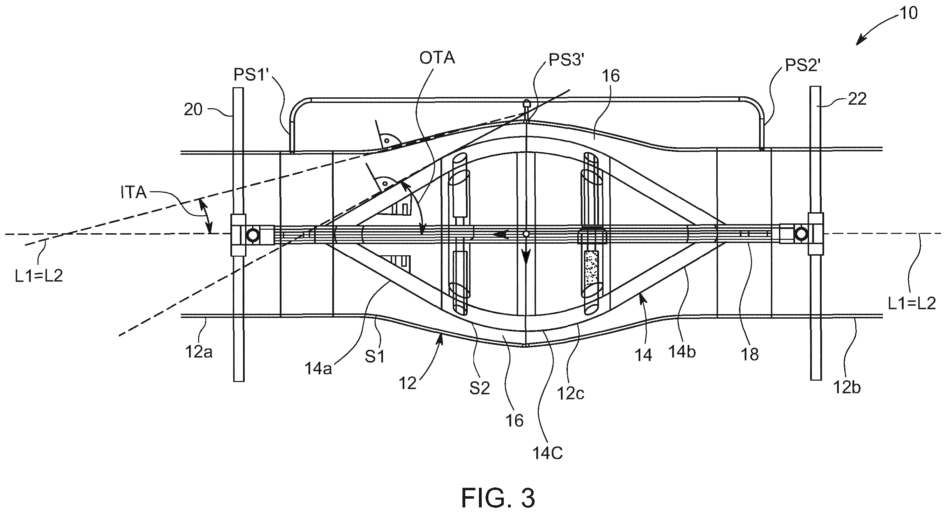

Fig. 2A shows valve 10 for air flow control according to a not claimed embodiment. Valve 10 comprises pipe section 12 and obstacle element 14 being arranged within pipe section 12. Obstacle element 14 is an ellipsoid and rugby ball shaped. As can be seen by the dashed line, the pipe section 12 defines a longitudinal pipe axis L1, which extends in the operative state in the direction of the air flow. Pipe section 12 comprises first pipe end portion 12a and second pipe end portion 12b. In the embodiment shown, both first and second pipe end portions 12a and 12b are characterized having a cylindrical tubular body. Arranged between first pipe end portion 12a and the second pipe end portion 12b is an inner pipe surface (S1, see Fig. 3).

The obstacle element 14 defines longitudinal obstacle axis L2, which is also arranged in the direction of airflow and which is in the embodiment shown identical to longitudinal pipe axis L2. Obstacle element 14 comprises first obstacle end portion 14a, which faces first pipe end portion 12a, and second obstacle end portion 14b, which faces second pipe end portion 12b. Between the first obstacle end portion and the second obstacle end portion is arranged outer obstacle surface (S2, see Fig. 3). The outer obstacle surface S2 generally faces the inner pipe surface S1. The outer obstacle surface S2 and the inner pipe surface S1 define an air passage region 16 between pipe section 12 and obstacle element 14. Along the longitudinal pipe axis L1, passage region 16 extends from the first obstacle end portion 14a to the second obstacle end portion 14b.

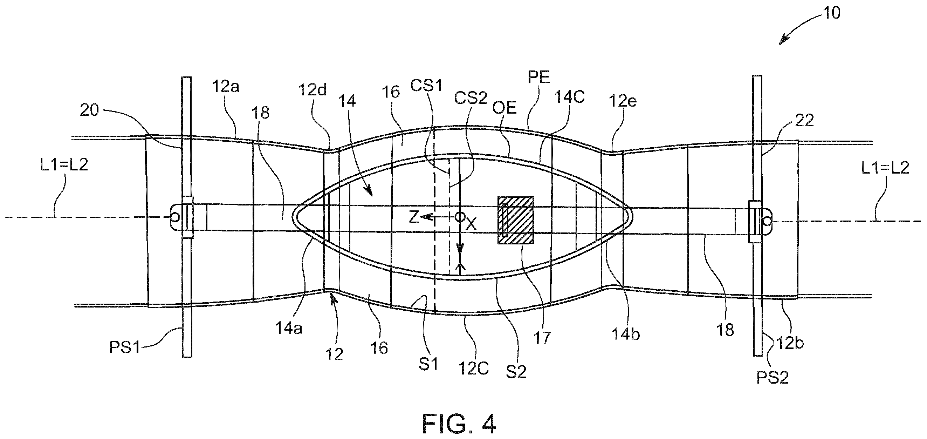

Pipe section 12 further comprises intermediate pipe portion 12c, which is arranged between, i.e. which is sandwiched between, first pipe end portion 12a and second pipe end portion 12b. As can be seen, an internal cross sectional area CS1 (see Fig. 4) of intermediate pipe portion 12c is different from, i.e. in this case larger than, an internal cross sectional area of first pipe end portion 12a and also an internal cross sectional area of second pipe end portion 12b. In other words, the total open area, which is perpendicular to the longitudinal pipe axis varies along the longitudinal pipe axis from the first pipe end portion via the intermediate pipe portion to the second pipe end portion.

Obstacle element 14 comprises intermediate obstacle portion 14c, between its first obstacle end portion 14a and its second obstacle end portion 14b. As can be seen a cross sectional area CS2 (see Fig. 4) of intermediate obstacle portion 14c is different from, i.e. in this embodiment larger than, a cross sectional area of first obstacle end portion 14a and of the second obstacle end portion 14b. In other words, the cross sectional area of obstacle element 14 in general varies, particularly increases, along longitudinal obstacle axis L2 and optionally also along longitudinal pipe axis L1, from first obstacle end portion 14a via intermediate obstacle portion 14c to second obstacle end portion 14b. Obstacle element 14 is movably supported within pipe section 12, i.e. being movably at least along longitudinal pipe axis L1. Vale 10 further comprises a drive element (not shown here, see Fig. 4, which is configured for moving the obstacle element with respect to pipe section 12, in particular along longitudinal pipe axis L1.

Fig. 3 shows a sectional view of valve 10 according to another not claimed embodiment.

Reference signs already explained above have the same meaning for this embodiment and other embodiments described in the following, unless noted otherwise. In Fig. 3 it can be seen that valve 10 comprises first and second support elements 20 and 22 being arranged along the longitudinal direction upstream and downstream of obstacle element 14. Support elements 20 and 22 are located within and attached to the first pipe end portion 12a, respectively second pipe portion 12b. As can be seen, both the first and second support element 20 and 22 laterally protrude first and second pipe portion 12a and 12b. Guide element 18 extends between and is attached to first support element 20 and second support element 22. Guide element 18 protrudes obstacle element 14 along longitudinal obstacle axis L2. The inner surface S1 of pipe section 12 at intermediate pipe section 12c comprises an inner taper with respect to longitudinal pipe axis L1. A maximum inner taper angle ITA between a tangential plane of the inner pipe surface S1 and longitudinal pipe axis L1 is shown, which can be between 5° and 20°. The outer obstacle surface S2 at intermediate obstacle portion 14c of obstacle element 14 comprises an outer taper with respect to longitudinal obstacle axis L2. A maximum outer taper angle OTA between a tangential plane of outer obstacle surface S2 and longitudinal obstacle axis L2 can be between 10° and 40°. In general, in this or in any other embodiment, the maximum inner taper angle ITA may be smaller than the maximum outer taper angle OTA. Furthermore, three pressure sensor means PS1', PS2' and PS3' are shown. First pressure means PS1' is comprised by first pipe end portion 12a and second pressure means PS2' is comprised by second pipe end portion 12b. Intermediate pipe portion 12c comprises pressure sensor means PS3' at the maximum or plateau portion of the longitudinal pipe profile $Ri(x)$, i.e. at the position at which the inner cross section of pipe portion 12, respectively intermediate portion 12c has a maximum value, i.e. the largest cross section, respectively the largest total open area.

Fig. 4 shows another embodiment of valve 10. In the illustration drive element 17 is shown, which is configured for moving obstacle element 14 with respect to the pipe section 12 along guide element 18. Between first pipe end portion 12a and second pipe end portion 12b is a widened pipe portion forming a pipe enlargement PE of pipe section 12. In this embodiment, the pipe enlargement is rotationally symmetric with respect to the longitudinal pipe axis L1. The lateral extension, i.e. perpendicular to longitudinal pipe axis L1 defines the inner radius Ri. Along longitudinal pipe axis L1, the inner radius Ri(x) defines a longitudinal pipe profile which varies as a function of longitudinal position x along the longitudinal pipe axis. Vice versa, between first obstacle end portion 14a and second obstacle end portion 14b is a widened obstacle portion forming an obstacle enlargement OE of obstacle element 14. Obstacle enlargement OE is rotationally symmetrical with respect to the longitudinal obstacle axis L2. The lateral extension of the obstacle element, i.e. perpendicular to longitudinal obstacle axis L2, defines outer radius Ro. This outer radius defines along the longitudinal obstacle axis a longitudinal obstacle profile Ro(x) which varies as a function of longitudinal position x along the longitudinal obstacle axis L2.

Pipe portion 12 comprises two pipe constriction portions, i.e. first pipe constriction portion 12d and second pipe constriction portion 12e. First pipe constriction portion 12d is arranged along longitudinal pipe axis L1 between intermediate pipe portion 12c and first support element 20. Vice versa, second pipe constriction portion 12e is arranged along longitudinal pipe axis L1 between intermediate pipe portion 12c and second support element 22. In this embodiment valve 10 comprises only two pressure sensor means, namely PS1 being arranged at first support element 20 and PS2 being arranged at second support element 22. Along the longitudinal pipe axis L1, each of the pipe constriction portions defines a minimum inner cross section of pipe portion 12, i.e. a minimum total open area. Thus upstream and downstream of each of the pipe constriction portions, the inner cross section, respectively the total open area of the pipe portion 12 is larger than at the corresponding pipe constriction portion.

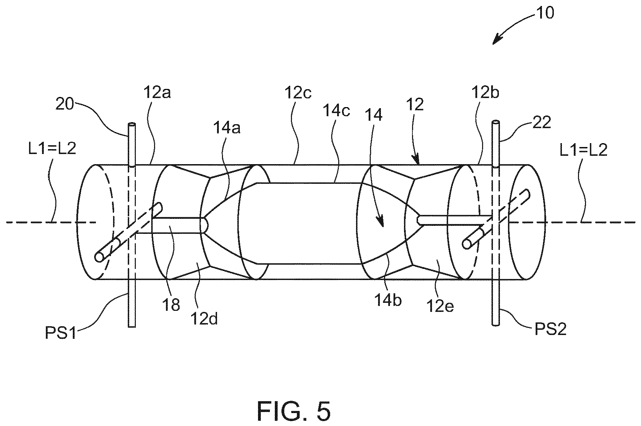

Fig. 5 shows another embodiment of valve 10 in which intermediate obstacle portion 14c has a cylindrical shape, while first obstacle end portion 14a and second obstacle end portion 14b have a cone shape, respectively a frustoconical shape. Also in this embodiment, valve 10 comprises only two pressure sensor means, namely PS1 being arranged at first support element 20 and PS2 being arranged at second support element 22.

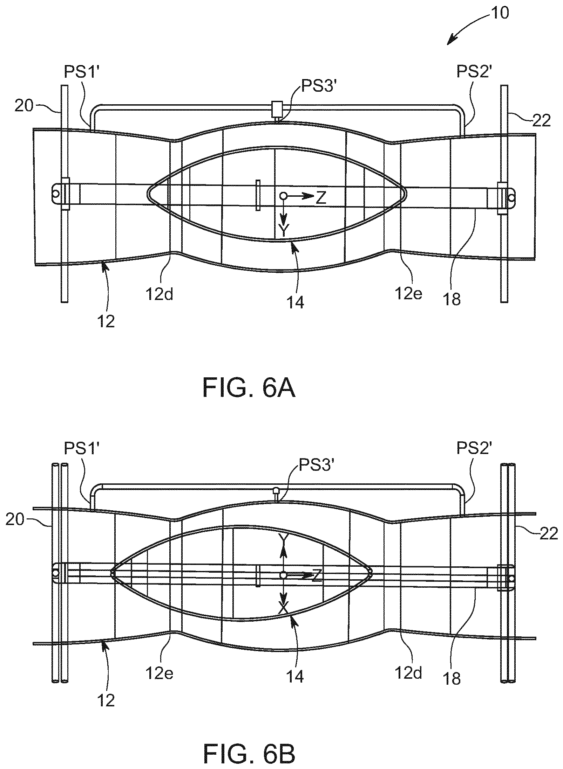

Fig. 6A shows another not claimed embodiment, which is a variant of the embodiment shown in Fig. 5. Here valve 10 comprises three pressure sensor means. PS1' is arranged at first pipe end portion, i.e. between constriction 12d and support element 20 where the pipe portion 12 has a cylindrical shape. PS3' is arranged at second pipe end portion, i.e. between constriction 12e and support element 22 where the pipe portion 12 has a cylindrical shape.

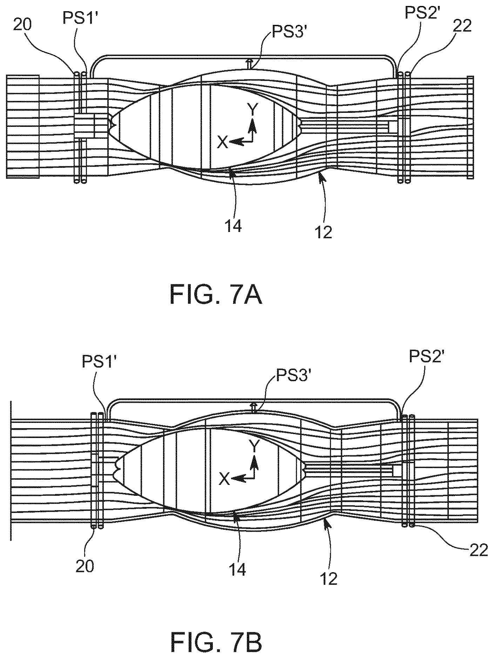

The third pressure sensor means PS3' is arranged at the intermediate pipe portion at the position along the longitudinal pipe axis L1 with the largest inner cross-section, respectively the maximum total open area. Fig. 6B shows the valve of Fig. 6A close to its most closed position. As can be seen, obstacle element 14 has been moved along longitudinal pipe axis L1. Fig. 7A and 7B show a flow pattern around the valve of Fig. 6A in two different positions.

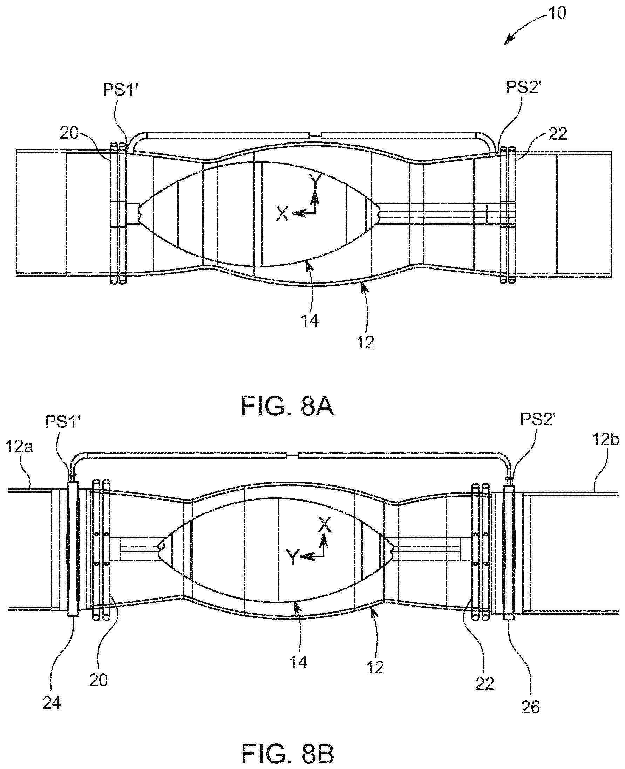

Fig. 8A shows valve 10 according to another embodiment of the invention. This embodiment is related to the embodiment shown in Fig. 6A, however, valve 10 comprises only two pressure sensor means PS1' and PS2'. PS1' is arranged at first pipe end portion, i.e. between constriction 12d and support element 20 where the pipe portion 12 has a cylindrical shape.

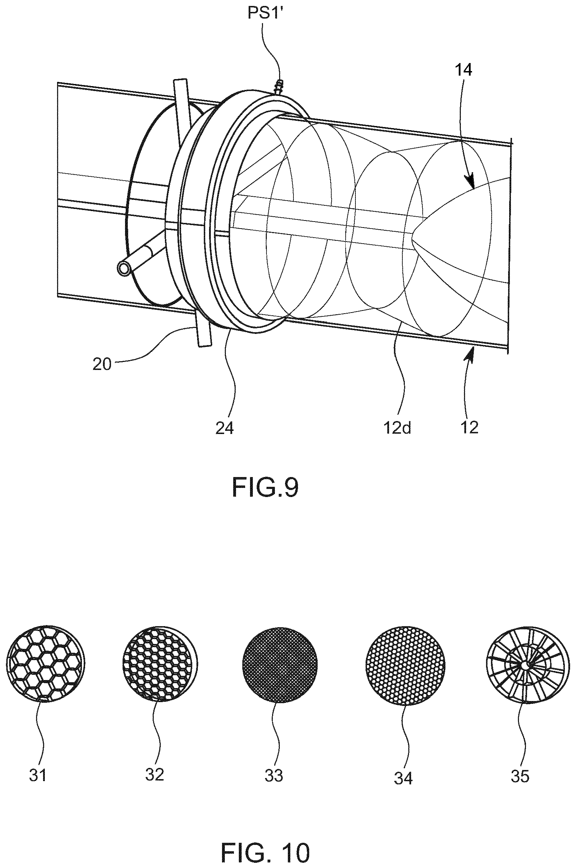

Fig. 8B shows another embodiment of a valve 10 according to the invention. This embodiment differs from Fig. 8A, in that it comprises first and second flow ring arrangements 24 and 26 which allow for a spatially averaged pressure measurement. Both flow ring arrangements comprise a pressure sensor means PS1' and PS2', which are arranged within first pipe end portion 12a and second pipe end portion 12b. Fig. 9 shows in detail first flow ring arrangement 24.

Fig. 10 shows different types of air flow resistors 31 - 35 which may be used with a valve according to any of the embodiments described herein.

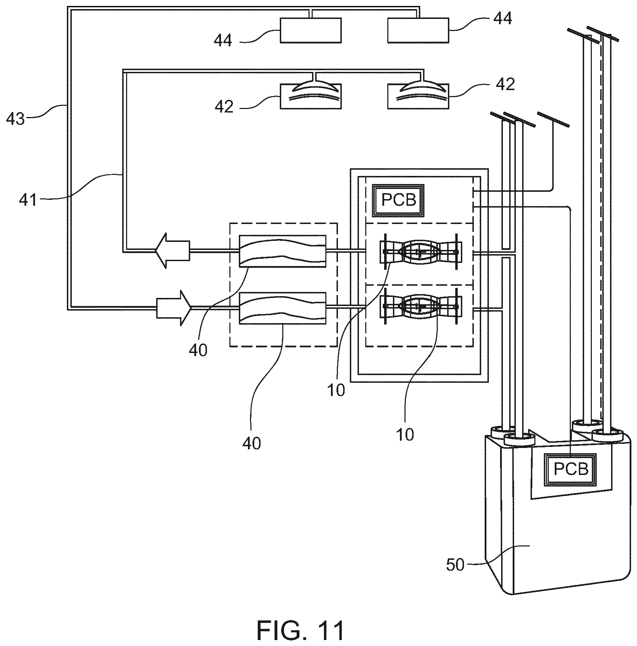

Fig. 11 is a schematic diagram showing a typical installation environment two valves 10 according to invention are installed. The valves 10 are used to control airflow through supply air line 41 and return air line 43 to a first apartment from and to central heat recovery ventilation unit 50.

**List of reference signs**

| | |
|---|---|
| 2 | flap (prior art) |
| 4 | pipe section (prior art) |
| 10 | valve |
| 12 | pipe section |
| 12a | first pipe end portion |
| 12b | second pipe end portion |
| 12c | intermediate pipe portion |
| 12d | first pipe constriction portion |
| 12e | second pipe constriction portion |
| S1 | inner pipe surface |
| 14 | obstacle element |
| 14a | first obstacle end portion |
| 14b | second obstacle end portion |
| 14c | intermediate obstacle portion |

| | |
|---|---|
| S2 | outer obstacle surface |
| L1 | longitudinal pipe axis |
| L2 | longitudinal obstacle axis |
| 16 | air passage region |
| CS1 | internal cross sectional area of intermediate pipe portion |
| CS2 | cross sectional area of intermediate obstacle portion |
| 17 | drive element |
| 18 | guide element |
| 20 | first support element |
| 22 | second support element |
| 24 | first flow ring arrangement |
| 26 | second flow ring arrangement |
| 31 | air flow resistor / air flow straightener |
| 32 | air flow resistor / air flow straightener |
| 33 | air flow resistor / air flow straightener |
| 34 | air flow resistor / air flow straightener |
| 35 | air flow resistor / air flow straightener |
| 40 | silencer |
| 41 | supply air line |
| 42 | supply air valve |
| 43 | return air line |
| 44 | return air valve |
| 50 | central heat recovery ventilation unit |
| PE | pipe enlargement |
| OE | obstacle enlargement |
| ITA | inner taper angle |
| OTA | outer taper angle |
| PS1 | first pressure sensor means |
| PS2 | second pressure sensor means |
| PS1' | first pressure sensor means |
| PS2' | second pressure sensor means |
| PS3' | third pressure sensor means |
| mt | microturbulent region within air flow |
| MT | macroturbulent region within air flow |

**Claims**

1. A valve (10) for air flow control comprising a pipe section (12) and an obstacle element (14) arranged within the pipe section (12), wherein the pipe section (12) defines a longitudinal pipe axis (L1) and has a first pipe end portion (12a), a second pipe end portion (12b) and an inner pipe surface (S1) between the first pipe end portion and the second pipe end portion, wherein the obstacle element (14) defines a longitudinal obstacle axis (L2) and has a first obstacle end portion (14a), a second obstacle end portion (14b) and an outer obstacle surface (S2) between the first obstacle end portion and the second obstacle end portion, and wherein the inner pipe surface (S1) and the outer obstacle surface (S2) define an air passage region (16) between the pipe section (12) and the obstacle element (14), wherein the pipe section (12) has an intermediate pipe portion (12c), between its first pipe end portion (12a) and its second pipe end portion (12b), where an internal cross sectional area (CS1) of the intermediate pipe portion (12c) is different from, i.e. either a) larger or b) smaller than, an internal cross sectional area of the first pipe end portion (12a) and of the second pipe end portion (12b), wherein the first pipe end portion (12a) and the second pipe end portion (12b) comprise pressure sensor means (PS1', PS2'), and

   the obstacle element (14) has an intermediate obstacle portion (14c), between its first obstacle end portion (14a) and its second obstacle end portion (14b), where a cross sectional area (CS2) of the intermediate obstacle portion (14c) is different from, i.e. either a) larger or b) smaller than, a cross sectional area of the first obstacle end portion (14a) and of the second obstacle end portion (14b);
   the obstacle element (14) being movably supported within the pipe section (12); and
   a drive element (17) being provided for moving the obstacle element (14) with respect to the pipe section (12), **characterized in that** the first pipe end portion (12a) comprises a first flow ring arrangement for spatially averaged pressure measurement, and **in that** the second pipe end portion (12b) comprises a second flow ring arrangement for spatially averaged pressure measurement.

2. The valve according to claim 1, wherein the obstacle element (14) is movably supported by a guide element (18) extending along the longitudinal pipe axis (L1), wherein preferably the valve is **characterized by** a first support element (20) located within and attached to the first pipe end portion (12a), a second support element (22) located within and attached to the second pipe end portion (12b), the guide element (18) being fixed to the first support element (20) and the second support element (22) and extending therebetween along the longitudinal pipe axis (L1).

3. The valve according to any one of claim 2, wherein the obstacle element (14) is movably mounted on the guide element (18) and can be moved to selected longitudinal positions with respect to the pipe section (12) along the longitudinal axis (L1).

4. The valve according to claim 2 or 3, wherein the guide element (18) extends through the inside of the obstacle element (14), wherein preferably the drive element (17) is located within the obstacle element (14) and adapted to interact with the guide element (18).

5. The valve according to any one of the previous claims, wherein at least one of the pipe section (12) and the obstacle element (14) is rotationally symmetrical with respect to the longitudinal pipe axis (L1) and the longitudinal obstacle axis (L2), respectively, wherein preferably the obstacle element (14) and the pipe section (12) are arranged concentrically to each other with the longitudinal pipe axis (L1) and the longitudinal obstacle axis (L2) coinciding.

6. The valve according to any one of the previous claims, wherein the intermediate pipe portion (12c) between the first pipe end portion (12a) and the second pipe end portion (12b) is a widened pipe portion forming a pipe enlargement of the pipe section (12), wherein preferably the pipe enlargement (PE) is rotationally symmetrical with respect to the longitudinal pipe axis (L1) and has an inner radius $Ri(x)$ defining a longitudinal pipe profile which varies as a function of longitudinal position x along the longitudinal pipe axis (L1).

7. The valve according to claim 6, wherein the longitudinal pipe profile $Ri(x)$ has the following consecutive profile portions:

   a first profile portion with increasing positive slope $dRi/dx$;
   a first inflexion point;
   a second profile portion with decreasing positive slope $dRi/dx$;
   a maximum;
   a third profile portion with increasing negative slope $dRi/dx$;
   a second inflexion point;
   a fourth profile portion with decreasing negative slope $dRi/dx$,
   wherein preferably the maximum is a profile portion with zero slope.

8. The valve according to any one of the previous claims, wherein the intermediate obstacle portion (14c) between the first obstacle end portion (14a) and the second obstacle end portion (14b) is a widened obstacle portion forming an obstacle enlargement of the obstacle element (14), wherein preferably the obstacle enlargement is rotationally symmetrical with respect to the longitudinal obstacle axis (L2) and has an outer radius $Ro(x)$ defining a longitudinal obstacle profile which varies as a function of longitudinal position x along the longitudinal obstacle axis (L2).

9. The valve according to claim 8, wherein the longitudinal obstacle profile $Ro(x)$ has the following consecutive profile portions:

   a first profile portion with positive slope $dRo/dx$;
   a maximum;
   a second profile portion with negative slope $dRo/dx$;
   or wherein the longitudinal obstacle profile $Ro(x)$

has the following consecutive profile portions:

   a first profile portion with increasing positive slope $dRo/dx$;
   a first inflexion point;
   a second profile portion with decreasing positive slope $dRo/dx$;
   a maximum;
   a third profile portion with increasing negative slope $dRo/dx$;
   a second inflexion point;
   a fourth profile portion with decreasing negative slope $dRo/dx$.

10. The valve according to claim 9, wherein the intermediate pipe portion (12c) comprises pressure sensor means (PS3') at the maximum of the longitudinal pipe profile $Ri(x)$.

11. The valve according to any one of claims the previous claims, wherein the inner pipe surface (S1) at the intermediate pipe portion (12c) of the pipe section (12) comprises an inner taper with respect to the longitudinal pipe axis (L1) and the outer obstacle surface (S2) at the intermediate obstacle portion (14c) of the obstacle element (14) comprises an outer taper with respect to the longitudinal obstacle axis (L2), wherein preferably a maximum inner taper angle (ITA) between a tangential plane of the inner pipe surface (S1) and the longitudinal pipe axis (L1) is comprised between 5° and 20°, preferably between 5° and 15°.

12. The valve according to claim 11, wherein a maximum outer taper angle (OTA) between a tangential plane of the outer obstacle surface (S2) and the longitudinal obstacle axis (L2) is comprised between 10° and 40°, preferably between 10° and 30°.

13. The valve according to claim 11 or 12, wherein at least a portion of the inner taper and/or the outer taper is an envelope of a cone or a truncated cone, wherein preferably the inner pipe surface (S1) comprises a first taper widening along a first longitudinal direction and a second taper widening along a second longitudinal direction opposite to the first longitudinal direction.

14. The valve according to any one of claims 2 to 13, wherein the first support element (20) and/or the second support element (22) comprise pressure sensor means (PS1, PS2).

15. The valve according to any one of the previous claims, wherein the first pipe end portion (12a) comprises a first pipe constriction portion (12d) between the first support element (20) and the obstacle element (14) and/or wherein the second pipe end portion (12b) comprises a second pipe constriction portion (12e) between the second support element (22) and the obstacle element (14).

**Patentansprüche**

1. Ventil (10) zur Luftstromsteuerung, umfassend ein Rohrstück (12) und ein innerhalb des Rohrstücks (12) angeordnetes Hinderniselement (14), wobei das Rohrstück (12) eine Rohr-Längsachse (L1) definiert und einen ersten Rohrendteil (12a), einen zweiten Rohrendteil (12b) und eine innere Rohroberfläche (S1) zwischen dem ersten Rohrendteil und dem zweiten Rohrendteil aufweist, wobei das Hinderniselement (14) eine Hindernis-Längsachse (L2) definiert und einen ersten Hindernisendteil (14a), einen zweiten Hindernisendteil (14b) und eine äußere Hindernisoberfläche (S2) zwischen dem ersten Hindernisendteil und dem zweiten Hindernisendteil aufweist, und wobei die innere Rohroberfläche (S1) und die äußere Hindernisoberfläche (S2) einen Luftdurchlassbereich (16) zwischen dem Rohrstück (12) und dem Hinderniselement (14) definieren, wobei

das Rohrstück (12) einen mittleren Rohrteil (12c) zwischen seinem ersten Rohrendteil (12a) und seinem zweiten Rohrendteil (12b) aufweist, wobei eine innere Querschnittsfläche (CS1) des mittleren Rohrteils (12c) sich von einer inneren Querschnittsfläche des ersten Rohrendteils (12a) und des zweiten Rohrendteils (12b) unterscheidet, d.h. entweder a) größer oder b) kleiner ist als diese, wobei der erste Rohrendteil (12a) und der zweite Rohrendteil (12b) Drucksensoreinrichtungen (PS1', PS2') umfassen; und
das Hinderniselement (14) einen mittleren Hindernisteil (14c) zwischen seinem ersten Hindernisendteil (14a) und seinem zweiten Hindernisendteil (14b) aufweist, wobei eine Querschnittsfläche (CS2) des mittleren Hindernisteils (14c) sich von einer Querschnittsfläche des ersten Hindernisendteils (14a) und des zweiten Hindernisendteils (14b) unterscheidet, d.h. entweder a) größer oder b) kleiner ist als diese;
wobei das Hinderniselement (14) innerhalb des Rohrstücks (12) beweglich gelagert ist; und ein Antriebselement (17) vorgesehen ist, um das Hinderniselement (14) in Bezug auf das Rohrstück (12) zu bewegen, **dadurch gekennzeichnet, dass** der erste Rohrendteil (12a) eine erste Strömungsringanordnung zur räumlich gemittelten Druckmessung umfasst, und dass der zweite Rohrendteil (12b) eine zweite Strömungsringanordnung zur räumlich gemittelten Druckmessung umfasst.

2. Ventil gemäß Anspruch 1, wobei das Hinderniselement (14) durch ein sich entlang der Rohr-Längsachse (L1) erstreckendes Führungselement (18) beweglich gelagert ist, wobei das Ventil vorzugsweise **gekennzeichnet ist durch** ein erstes Stützelement (20), das sich innerhalb des ersten Rohrendteils (12a) befindet und an diesem befestigt ist, ein zweites Stützelement (22), das sich innerhalb des zweiten Rohrendteils (12b) befindet und an diesem befestigt ist, wobei das Führungselement (18) an dem ersten Stützelement (20) und dem zweiten Stützelement (22) befestigt ist und sich dazwischen entlang der Rohr-Längsachse (L1) erstreckt.

3. Ventil gemäß einem der Ansprüche 2, wobei das Hinderniselement (14) beweglich an dem Führungselement (18) montiert ist und in ausgewählte Längspositionen in Bezug auf das Rohrstück (12) entlang der Längsachse (L1) bewegt werden kann.

4. Ventil gemäß Anspruch 2 oder 3, wobei das Führungselement (18) durch das Innere des Hinderniselements (14) verläuft, wobei vorzugsweise das Antriebselement (17) innerhalb des Hinderniselements (14) angeordnet und zum Zusammenwirken mit dem Führungselement (18) ausgebildet ist.

5. Ventil gemäß einem der vorhergehenden Ansprüche, wobei mindestens eines von Rohrstück (12) und Hinderniselement (14) rotationssymmetrisch in Bezug auf die Rohr-Längsachse (L1) bzw. die Hindernis-Längsachse (L2) ist, wobei vorzugsweise das Hinderniselement (14) und das Rohrstück (12) konzentrisch zueinander angeordnet sind und die Rohr-Längsachse (L1) und die Hindernis-Längsachse (L2) zusammenfallen.

6. Ventil gemäß einem der vorhergehenden Ansprüche, wobei der mittlere Rohrteil (12c) zwischen dem ersten Rohrendteil (12a) und dem zweiten Rohrendteil (12b) ein verbreiteter Rohrteil ist, der eine Rohrverbreiterung des Rohrstücks (12) bildet, wobei vorzugsweise die Rohrverbreiterung (PE) rotationssymmetrisch in Bezug auf die Rohr-Längsachse (L1) ist und einen Innenradius Ri(x) aufweist, der ein Rohr-Längsprofil definiert, das sich in Abhängigkeit von der Längsposition x entlang der Rohr-Längsachse (L1) ändert.

7. Ventil gemäß Anspruch 6, wobei das Rohr-Längsprofil Ri(x) die folgenden aufeinanderfolgenden Profilteile aufweist

einen ersten Profilteil mit zunehmender positiver Steigung dRi/dx;
einen ersten Wendepunkt;
einen zweiten Profilteil mit abnehmender positiver Steigung dRi/dx;

ein Maximum;
einen dritten Profilteil mit zunehmender negativer Steigung dRi/dx;
einen zweiten Wendepunkt;
einen vierten Profilteil mit abnehmender negativer Steigung dRi/dx,
wobei vorzugsweise das Maximum ein Profilteil mit der Steigung Null ist.

8. Ventil gemäß einem der vorhergehenden Ansprüche, wobei der mittlere Hindernisteil (14c) zwischen dem ersten Hindernisendteil (14a) und dem zweiten Hindernisendteil (14b) ein verbreiterter Hindernisteil ist, der eine Hindernisverbreiterung des Hinderniselements (14) bildet, wobei vorzugsweise die Hindernisverbreiterung rotationssymmetrisch in Bezug auf die Hindernis-Längsachse (L2) ist und einen Außenradius Ro(x) aufweist, der ein Hindernis-Längsprofil definiert, das als Funktion der Längsposition x entlang der Hindernis-Längsachse (L2) variiert.

9. Ventil gemäß Anspruch 8, wobei das Hindernis-Längsprofil Ro(x) die folgenden aufeinanderfolgenden Profilteile aufweist

einen ersten Profilteil mit positiver Steigung dRo/dx;
ein Maximum;
einen zweiten Profilteil mit negativer Steigung dRo/dx;
Oder wobei das Hindernis-Längsprofil Ro(x) die folgenden aufeinanderfolgenden Profilteile aufweist:

einen ersten Profilteil mit zunehmender positiver Steigung dRo/dx;
einen ersten Wendepunkt;
einen zweiten Profilteil mit abnehmender positiver Steigung dRo/dx;
ein Maximum;
einen dritten Profilteil mit zunehmender negativer Steigung dRo/dx;
einen zweiten Wendepunkt;
einen vierten Profilteil mit abnehmender negativer Steigung dRo/dx.

10. Das Ventil gemäß Anspruch 9, wobei der mittlere Rohrteil (12c) eine Drucksensoreinrichtung (PS3') am Maximum des Rohr-Längsprofils Ri(x) umfasst.

11. Ventil gemäß einem der vorhergehenden Ansprüche, wobei die innere Rohroberfläche (S1) am mittleren Rohrteil (12c) des Rohrstücks (12) eine Innenverjüngung in Bezug auf die Rohr-Längsachse (L1) umfasst und die äußere Hindernisoberfläche (S2) am mittleren Hindernisteil (14c) des Hinderniselements (14) eine Außenverjüngung in Bezug auf die Rohr-Längsachse (L2) umfasst, wobei vorzugsweise ein maximaler innerer Verjüngungswinkel (ITA) zwischen einer tangentialen Ebene der inneren Rohroberfläche (S1) und der Rohr-Längsachse (L1) zwischen 5° und 20°, vorzugsweise zwischen 5° und 15° umfasst.

12. Das Ventil gemäß Anspruch 11, wobei ein maximaler äußerer Verjüngungswinkel (OTA) zwischen einer tangentialen Ebene der äußeren Hindernisoberfläche (S2) und der Hindernis-Längsachse (L2) zwischen 10° und 40°, vorzugsweise zwischen 10° und 30°, umfasst.

13. Ventil gemäß Anspruch 11 oder 12, wobei mindestens ein Teil der Innenverjüngung und/oder der Außenverjüngung eine Einhüllende eines Kegels oder eines Kegelstumpfs ist, wobei vorzugsweise die innere Rohroberfläche (S1) eine erste Verjüngung umfasst, die sich entlang einer ersten Längsrichtung verbreitert, und eine zweite Verjüngung, die sich entlang einer zweiten Längsrichtung entgegengesetzt zur ersten Längsrichtung verbreitert.

14. Ventil gemäß einem der Ansprüche 2 bis 13, wobei das erste Stützelement (20) und/oder das zweite Stützelement (22) Drucksensoreinrichtungen (PS1, PS2) umfasst.

15. Ventil gemäß einem der vorhergehenden Ansprüche, wobei der erste Rohrendteil (12a) einen ersten Rohrverengungsteil (12d) zwischen dem ersten Stützelement (20) und dem Hinderniselement (14) umfasst und/oder wobei der zweite Rohrendteil (12b) einen zweiten Rohrverengungsteil (12e) zwischen dem zweiten Stützelement (22) und dem Hinderniselement (14) umfasst.

**Revendications**

1. Vanne (10) de régulation de flux d'air comprenant une section de tuyau (12) et un élément d'obstacle (14) disposé dans la section de tuyau (12), dans laquelle la section de tuyau (12) définit un axe longitudinal du tuyau (L1) et présente une première partie d'extrémité de tuyau (12a), une deuxième partie d'extrémité de tuyau (12b) et une surface de tuyau intérieure (S1) entre la première partie d'extrémité de tuyau et la deuxième partie d'extrémité de tuyau, dans lequel l'élément d'obstacle (14) définit un axe longitudinal de l'obstacle (L2) et possède une première partie d'extrémité d'obstacle (14a), une deuxième partie d'extrémité d'obstacle (14b) et une surface d'obstacle extérieure (S2) entre la première partie d'extrémité d'obstacle et la deuxième partie d'extrémité d'obstacle, et dans lequel la surface de tuyau intérieure (S1) et la surface d'obstacle extérieure (S2) définissent une région de passage d'air (16) entre la section de tuyau (12) et l'élément d'obstacle (14), dans lequel la section de tuyau (12) a une partie de tuyau intermédiaire (12c), entre sa première partie d'extrémité de tuyau (12a) et sa deuxième partie d'extrémité de tuyau (12b), où une surface de section transversale interne (CS1) de la partie de tuyau intermédiaire (12c) est différente de, c'est-à-dire soit a) plus grande ou b) plus petite d'une section transversale interne de la première partie d'extrémité de tuyau (12a) et de la deuxième partie d'extrémité de tuyau (12b), la première partie d'extrémité de tuyau (12a) et la deuxième partie d'extrémité de tuyau (12b) comprenant des moyens de détection de pression (PS1', PS2') ; et

l'élément d'obstacle (14) a une partie d'obstacle intermédiaire (14c), entre sa première partie d'extrémité d'obstacle (14a) et sa deuxième partie d'extrémité d'obstacle (14b), où une surface de section transversale (CS2) de la partie d'obstacle intermédiaire (14c) est différente, c'est-à-dire soit a) plus grande ou b) plus petite, d'une surface de section transversale de la première partie d'extrémité d'obstacle (14a) et de la deuxième partie d'extrémité d'obstacle (14b) ; l'élément d'obstacle (14) est supporté de manière mobile à l'intérieur de la section de tuyau (12) ; et un élément d'entraînement (17) est prévu pour déplacer l'élément d'obstacle (14) par rapport à la section de tuyau (12), **caractérisé en ce que** la première partie d'extrémité de tuyau (12a) comprend un premier arrangement d'anneau d'écoulement pour la mesure de la pression moyenne spatiale, et **en ce que** la deuxième partie d'extrémité de tuyau (12b) comprend un deuxième arrangement d'anneau d'écoulement pour la mesure de la pression moyenne spatiale.

2. Vanne selon la revendication 1, dans laquelle l'élément d'obstacle (14) est supporté de manière mobile par un élément de guidage (18) s'étendant le long de l'axe longitudinal du tuyau (L1), la vanne étant de préférence **caractérisée par** un premier élément de support (20) situé à l'intérieur de la première partie d'extrémité du tuyau (12a) et fixé à celle-ci, un deuxième élément de support (22) situé à l'intérieur de la deuxième partie d'extrémité du tuyau (12b) et fixé à celle-ci, l'élément de guidage (18) étant fixé au premier élément de support (20) et au deuxième élément de support (22) et s'étendant entre eux le long de l'axe longitudinal du tuyau (L1).

3. Vanne selon l'une quelconque des revendications 2, dans laquelle l'élément d'obstacle (14) est monté mobile sur l'élément de guidage (18) et peut être déplacé vers des positions longitudinales sélectionnées par rapport à la section de tuyau (12) le long de l'axe longitudinal (L1).

4. La vanne selon la revendication 2 ou 3, dans laquelle l'élément de guidage (18) s'étend à travers l'intérieur de l'élément d'obstacle (14), l'élément d'entraînement (17) étant de préférence situé à l'intérieur de l'élément d'obstacle (14) et adapté pour interagir avec l'élément de guidage (18).

5. Vanne selon l'une quelconque des revendications précédentes, dans laquelle au moins l'un de la section de tuyau (12) et de l'élément d'obstacle (14) est symétrique par rotation par rapport à l'axe longitudinal du tuyau (L1) et à l'axe longitudinal de l'obstacle (L2), respectivement, l'élément d'obstacle (14) et la section de tuyau (12) étant de préférence disposés concentriquement l'un par rapport à l'autre, l'axe longitudinal du tuyau (L1) et l'axe longitudinal de l'obstacle (L2) coïncidant.

6. Vanne selon l'une quelconque des revendications précédentes, dans laquelle la partie de tuyau intermédiaire (12c) entre la première partie d'extrémité de tuyau (12a) et la deuxième partie d'extrémité de tuyau (12b) est une partie de tuyau élargie formant un élargissement de tuyau de la section de tuyau (12), dans laquelle de préférence l'élargissement de tuyau (PE) est symétrique par rotation par rapport à l'axe longitudinal du tuyau (L1) et a un rayon intérieur $Ri(x)$ définissant un profil longitudinal de tuyau qui varie en fonction de la position longitudinale x le long de l'axe longitudinal du tuyau (L1).

7. Vanne selon la revendication 6, dans laquelle le profil longitudinal du tuyau $Ri(x)$ présente les parties de profil consécutives suivantes :

une première partie de profil avec une pente positive croissante $dRi/dx$ ;
un premier point d'inflexion ;
une deuxième partie de profil avec une pente positive décroissante $dRi/dx$ ;;
un maximum ;
une troisième partie de profil avec une pente négative croissante $dRi/dx$ ;
un deuxième point d'inflexion ;
une quatrième partie de profil avec une pente négative décroissante $dRi/dx$,
où, de préférence, le maximum est une partie de profil à pente nulle.

8. Valve selon l'une quelconque des revendications précédentes, dans lequel la partie d'obstacle intermédiaire (14c) entre la première partie d'extrémité d'obstacle (14a) et la deuxième partie d'extrémité d'obstacle (14b) est une partie d'obstacle élargie formant un élargissement d'obstacle de l'élément d'obstacle (14), dans lequel de préférence l'élargissement d'obstacle est symétrique par rotation par rapport à l'axe longitudinal de l'obstacle (L2) et a un rayon extérieur Ro(x) définissant un profil longitudinal de l'obstacle qui varie en fonction de la position longitudinale x le long de l'axe longitudinal de l'obstacle (L2).

9. Valve selon la revendication 8, dans laquelle le profil longitudinal de l'obstacle Ro(x) présente les parties de profil consécutives suivantes :

> une première partie de profil avec une pente positive dRo/dx ;
> un maximum ;
> une deuxième partie de profil avec une pente négative dRo/dx ;
> ou dans lequel le profil longitudinal de l'obstacle Ro(x) présente les parties de profil consécutives suivantes :

>> une première partie de profil avec une pente positive croissante dRo/dx ;
>> un premier point d'inflexion ;
>> une deuxième partie de profil avec une pente positive décroissante dRo/dx ;
>> un maximum ;
>> une troisième partie de profil avec une pente négative croissante dRo/dx ;
>> un deuxième point d'inflexion ;
>> une quatrième partie de profil avec une pente négative décroissante dRo/dx.

10. Vanne selon la revendication 9, dans laquelle la partie de tuyau intermédiaire (12c) comprend des moyens de détection de pression (PS3') au maximum du profil longitudinal de tuyau Ri(x).

11. Vanne selon l'une quelconque des revendications précédentes, dans laquelle la surface intérieure de tuyau (S1) au niveau de la partie intermédiaire de tuyau (12c) de la section de tuyau (12) comprend une conicité intérieure par rapport à l'axe longitudinal de tuyau (L1) et la surface extérieure d'obstacle (S2) au niveau de la partie intermédiaire d'obstacle (14c) de l'élément d'obstacle (14) comprend une conicité extérieure par rapport à l'axe longitudinal de l'obstacle (L2), dans lequel, de préférence, un angle maximal de conicité intérieure (ITA) entre un plan tangentiel de la surface intérieure du tuyau (S1) et l'axe longitudinal du tuyau (L1) est compris entre 5° et 20°, de préférence entre 5° et 15°.

12. Vanne selon la revendication 11, dans laquelle un angle maximal de conicité externe (OTA) entre un plan tangentiel de la surface extérieure de l'obstacle (S2) et l'axe longitudinal de l'obstacle (L2) est compris entre 10° et 40°, de préférence entre 10° et 30°.

13. Vanne selon la revendication 11 ou 12, dans lequel au moins une partie de la conicité intérieure et/ou de la conicité extérieure est une enveloppe d'un cône ou d'un tronc de cône, la surface intérieure du tuyau (S1) comprenant de préférence une première conicité s'élargissant selon une première direction longitudinale et une deuxième conicité s'élargissant selon une deuxième direction longitudinale opposée à la première direction longitudinale.

14. Vanne selon l'une quelconque des revendications 2 à 13, dans laquelle le premier élément de support (20) et/ou le deuxième élément de support (22) comprennent des moyens de détection de pression (PS1, PS2).

15. Vanne selon l'une quelconque des revendications précédentes, dans laquelle la première partie d'extrémité de tuyau (12a) comprend une première partie de rétrécissement de tuyau (12d) entre le premier élément de support (20) et l'élément d'obstacle (14) et/ou dans laquelle la deuxième partie d'extrémité de tuyau (12b) comprend une deuxième partie de rétrécissement de tuyau (12e) entre le deuxième élément de support (22) et l'élément d'obstacle (14).

FIG. 1A

FIG. 1B

FIG. 2A

FIG. 2B

FIG. 3

FIG. 4

FIG. 5

FIG. 6A

FIG. 6B

FIG. 7A

FIG. 7B

FIG. 8A

FIG. 8B

PS1'

14

20

24

12d    12

FIG.9

31    32    33    34    35

FIG. 10

FIG. 11

**EP 4 162 181 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004238038 A